## Europäisches Patentamt

(19) **European Patent Office**

**Office européen des brevets**

(11) Publication number: **0 115 167**

**B1**

(12) **EUROPEAN PATENT SPECIFICATION**

(45) Date of publication of patent specification: **12.11.86**

(21) Application number: **83307798.5**

(22) Date of filing: **21.12.83**

(51) Int. Cl.⁴: **B 60 G 17/00**

(54) **Shock absorber control unit for use in controlling a vehicle suspension.**

(30) Priority: **27.12.82 JP 234584/82**

(43) Date of publication of application:
**08.08.84 Bulletin 84/32**

(45) Publication of the grant of the patent:
**12.11.86 Bulletin 86/46**

(84) Designated Contracting States:
**DE FR GB IT**

(56) References cited:
**DE-A-2 736 026**
**FR-A-1 079 482**
**JP-U-56 147 107**

**Patent Abstracts of Japan vol.5,no.97,24 June 1981**

**Patent Abstracts of Japan vol.7,no.55,5 March 1983**

(73) Proprietor: **TOYOTA JIDOSHA KABUSHIKI KAISHA**
**1, Toyota-cho Toyota-shi**
**.Aichi-ken 471 (JP)**

(72) Inventor: **Miyata Hiroshi Dai 2 Ekaku Apart B917**
**56 Banchi, 2-chome Ekakushinmachi**
**Toyota-shi Aichi-ken (JP)**

(74) Representative: **Ben-Nathan, Laurence Albert et al**
**c/o MICHAEL BURNSIDE & PARTNERS 2 Serjeants' Inn Fleet Street**
**London EC4Y 1HL (GB)**

## Description

The present invention relates to a shock absorber control unit for use in controlling a vehicle suspension, and particularly to a unit for controlling the vehicle roll velocity which occurs when a vehicle is driven along a curved road section.

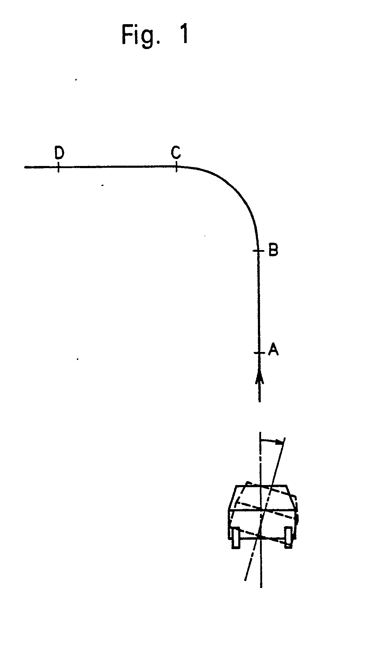

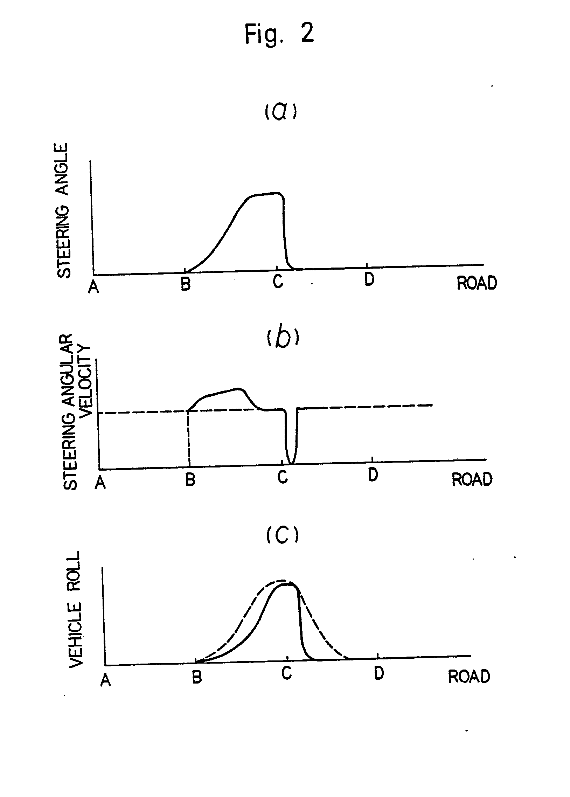

In general, when a vehicle is driven through a curve as shown in Figure 1 at a constant speed, the driver gradually rotates the steering wheel in the counterclockwise direction from point B, Figure 2(a) shows graphically the angle through which the steering shaft is rotated as the vehicle moves along the curved road section shown in Figure 1. From Figure 2(a), it is apparent that the steering angle increases gradually from the point B. Since a driver is hesitant to rotate quickly a steering wheel in a direction to increase body roll of the vehicle, the driver tends to rotate the steering wheel gradually as the vehicle moves along the curved road section. When the vehicle is driven thus through the curved road section and reaches the point C, the driver rotates the steering wheel in the clockwise direction for subsequent straight line motion. For this operation, the driver can rapidly rotate the steering wheel at a high steering angular velocity at a point just past the point C as shown in Figure 2(b). When a driver rotates a steering wheel in a direction to decrease the vehicle roll, he does so in an uninhibited manner. Therefore, the driver will readily rotate the steering wheel, at a point just past the point C, with a high angular velocity.

Heretofore, a shock absorber control unit has been proposed such that it increases the damping force of the shock absorber when the steering angular velocity exceeds a predetermined value decided by the vehicle speed, and thereby decreases the vehicle roll.

However the proposed shock absorber control unit is designed to increase the damping force of the shock absorber even when the operator returns the steering wheel from the steered position to the neutral position. Figure 2(c) shows graphically the degree of vehicle body roll, and the broken line in Figure 2(c) indicates the degree of the body roll of the vehicle according to the proposed prior art arrangement. As apparent from Figure 2(c), the degree of vehicle body roll from the point C to the point D according to the prior art, is almost the same as that of the body roll from the point B to the point C. This means that the vehicle is subjected to a high degree of body roll even when the driver rotates the steering wheel in the direction from the steered position to the neutral position thereof. This results in delay of the vehicle body being returned to its normal upright attitude.

Japanese Utility Model JP—U—56-147107 decribes a shock absorber control unit which has the features of the preamble of Claim 1.

The present invention was made in view of the foregoing background and to overcome the foregoing drawbacks.

It is an object of this invention to provide a shock absorber control unit for use in controlling a vehicle suspension which increases the damping force of a shock absorber when the steering wheel is rotated in the direction from a neutral position to a steered position, and does not increase the damping force of the shock absorber when the steering wheel is conversely rotated in the direction from the steered position to the neutral position.

To attain the above object, a shock absorber control unit for use in controlling a vehicle suspension according to the present invention comprises a vehicle speed sensor and a steering angle sensor. The output signal of the vehicle speed sensor is inputted to a vehicle speed signal generating means. Similarly, the output signal of the steering angle sensor is inputted to a steering angular velocity signal generating means. These signals of the vehicle speed and the steering angular velocity are compared with reference values of a reference value setting means by a comparator. The reference value setting means sets a first reference value when the steering wheel is steered in the direction from its neutral position to a steered position, and sets a second reference value to be larger than that of the first reference value when the steering wheel is steered in the direction from the steered position to the neutral position. When the comparator compares one of the reference values with the steering angular velocity signal, the comparator generates a first output signal when the angular velocity signal is larger than the reference values, and a second output signal when the steering angular velocity signal is smaller than the reference values. As a result, when the first output signal is generated, an actuating means increases the damping force of the shock absorber. Conversely, when the second output signal is generated, the actuating means decreases the damping force of the shock absorbers. Thus, when the vehicle runs on a curved road, the damping force of the absorber increases to prevent body roll of the vehicle.

The above object, features and advantages of the present invention will become more apparent from the following description of the preferred embodiment taken in conjunction with the accompanying drawings.

Fig. 1 is a schematic view showing a curved road and body roll of a vehicle;

Figs. 2 (a), (b) and (c) are graphs illustrating a steering angle, a steering angular velocity, and a vehicle's body roll, respectively, when a vehicle runs on the curved road section shown in Figure 1;

Fig. 3 is a schematic perspective view of a vehicle employing a shock absorber control unit according to the present invention;

Fig. 4 is a block diagram of an electronic control unit shown in Figure 3;

Fig. 5 is a block diagram of an electronic control unit employed in another embodiment of the present invention;

Fig. 6 is a flow chart of a program employed in the electronic control unit shown in Figure 5; and

Fig. 7 is a graph showing a relation between vehicle speed and a reference value.

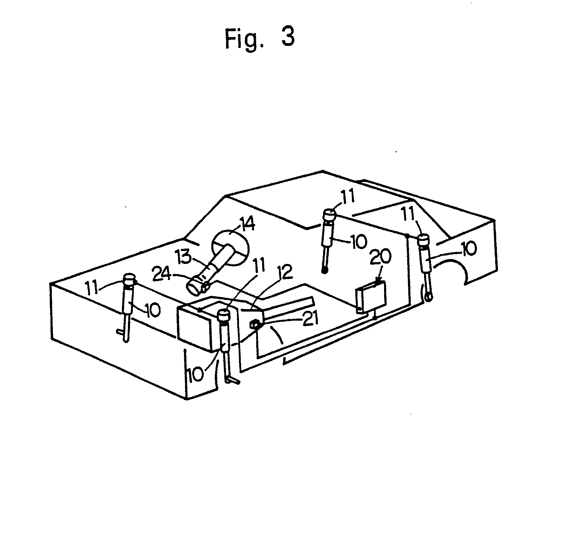

Figure 3 shows a schematic perspective view of a vehicle employing a shock absorber control unit according to the present invention. A vehicle, shown in Figure 3, has front-wheel and rear-wheel suspensions, each of which includes a pair of shock absorbers 10, whose damping force is adjustable. Each of the absorbers 10 includes an electric actuator which operates a flow control means, such as a variable orifice, therein. The numeral 20 designates an electronic control unit according to the present invention.

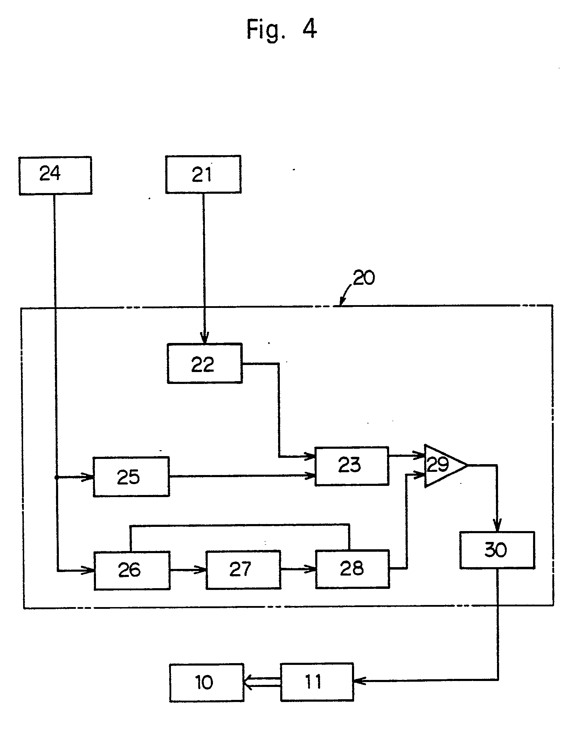

The electronic control unit 20, as shown in Figure 4, has a vehicle speed signal generating circuit 22, a steering angular velocity signal generating circuit 25, and a steering angle signal generating circuit 26. The vehicle speed signal generating circuit 22 receives the signal of a vehicle speed sensor 21, and calculates the actual vehicle speed from the signal, thereafter issues a vehicle speed signal corresponding to the actual vehicle speed. The steering angular velocity signal generating circuit 25 receives the signal of a steering angle sensor 24, and calculates the actual steering angular velocity from the signal, thereafter issues a steering angular velocity signal corresponding to the actual steering angular velocity signal.

The vehicle speed sensor 21, is mounted on a transmission 12, as shown in Figure 3, and issues a signal corresponding to the number of the revolutions of an output shaft of the transmission 12. The steering angle sensor 24 is mounted on an outer periphery of a steering column 13, and issues a steering angle corresponding to the steering angle of a steering shaft rotated by a steering wheel 14.

As shown in Figure 4, an arithmetic and logic circuit 23 for calculating a vehicle speed and a steering angular velocity, receives the signals of the circuits 22 and 25, and amends the steering angular velocity signal from the circuit 25 to larger values when the vehicle speed signal from the circuit 22 is a larger value. On the other hand, the arithmetic and logic circuit 23 amends the steering angular velocity signal from the circuit 25 to smaller values when the vehicle speed signal from the circuit 22 is a smaller value. These amended values by the circuit 23 are inputted to a comparator 29.

The steering angle signal generating circuit 26 receives the signal of the steering angle sensor 24, and calculates the actual steering angle to issue the steering angle signal corresponding to the actual steering angle.

The output signal of the steering angle generating circuit 26 is inputted to a circuit 27, which detects the direction of the rotation of the steering shaft. The circuit 27 detects whether the steering shaft is rotated in the direction from the neutral position to a steered position, or from a steered position to a further steered position, or from a steered position to the neutral position. The results detected by the circuit 27 are inputted to a reference value setting circuit 28. The reference value setting circuit 28 issues a reference value according to the output signals of the circuit 27.

When the steering shaft is rotated in the direction from the neutral position to a steered position, the circuit 28 sets a first reference value, "1". Next, when the steering shaft is rotated from a steered position to a further steered position, the circuit 28 sets a second reference value, "0.4". Further, when the steering shaft is rotated from the steered position to the neutral position, the circuit 28 sets third reference value, "3". These reference values of the circuit 28 are inputted to the comparator 29. The comparator 29 compares the amended values of the circuit 23 with the reference values of the circuit 28 to thereby issue an output signal corresponding to the compared results. When the amended value of the circuit 23 is larger than the reference value of the circuit 28, the comparator 29 issues a first output signal. On the other hand, when the amended value of the circuit 23 is smaller than the reference value of the circuit 28, the comparator 29 issues a second output signal. The output signals of the comparator 29 are inputted to an actuating circuit 30. The actuating circuit 30 operates an actuator 11 to increase the damping force of each of the shock absorbers 10 when the actuating circuit 30 receives the first output signal from the comparator 29. Conversely, when the actuating circuit 30 receives the second output signal from the comparator 29, the actuating circuit 30 operates the actuator 11 to decrease the damping force of each of the shock absorbers 10.

When a vehicle equipped with the electronic control unit 20, runs on a curved road, as shown in Figure 1 at a high speed, an operator rotates the steering wheel 14 in the counterclockwise direction at the point B, the vehicle tends to incline to the position illustrated in a broken line in Figure 1. In this condition, the arithmetic and logic circuit 23 amends the steering angular velocity signal from the circuit 25 to a larger value because the vehicle speed signal from the circuit 22 is a larger value. Hence, the amended value of the circuit 23 exceeds the first reference value, "1" set by the circuit 28. Due to this, the comparator 29 issues the first output signal, and this first output signal is inputted to the actuating circuit 30. The actuating circuit 30 operates the actuator 11 so that it can increase the damping force of each of the shock absorbers 10. This is attained by an operation such that the oil flow within the shock absorbers 10 is restricted, thereby it delays the constrictive slide movement of the shock absorbers 10. The vehicle's roll is adjusted to be moderate from the point B to the point C, as shown in the solid line in Figure 2(c).

When the operator further rotates the steering wheel in the counterclockwise direction from the steered position, the circuit 23 amends the steering angular velocity to a large value even if the steering angular velocity is small. The amended value of the circuit 23 exceeds the first reference value, "1" set by the reference value setting circuit 28. Due to this, the comparator 29 issues the first output signal, and this first output signal is inputted to the actuating circuit 30. The actuating circuit 30 actuates each of the actuators 11 mounted on the each of the shock absorbers 10, in order to increase the damping force of each of the shock absorbers 10. As a result, the oil flow of the chamber within each of the shock absorbers 10 is restricted, thereby decreasing the speed at the time when the shock absorber is contracted. This effects the smaller vehicle roll illustrated in the solid line in Figure 2(c) than the vehicle roll according to the prior art illustrated in the broken line in Figure 2(c).

When the operator steers the steering wheel in the counterclockwise direction from the steered position to a further steered position, the steering angular velocity is amended to the large value in the arithmetic and logic circuit 23 even if the steering angular velocity is small. When the amended value exceeds the second reference value, "0.4" set by the reference value setting circuit 28, the comparator 29 issues the first output signal. This first output signal is inputted to the actuating circuit 30. The actuating circuit 30 actuates each of the actuators 11, and further increases the damping force of the each of the shock absorbers 10. Hence, the shock absorbers 10 are constrained to be contracted at a much slower speed, thereby decreasing the vehicle's roll. This results in a steady steering control for decreasing the vehicle's roll, thereby the operator can operate the steering wheel in the condition in an uninhibited manner. When the vehicle reaches the point C indicated in Figure 1 after being driven through the curved section, the operator rotates the steering wheel 14 from the steered position to the neutral position in order to drive the vehicle in a straight line. At this time, the reference value setting circuit 28 sets the third reference value, "3", which is larger than the first or second reference value. As the amended value of the arithmetic and logic circuit 23 is designed not to exceed the value of the third reference, the comparator 29 issues the second output signal. The second output signal of the comparator 29 is inputted to the actuating circuit 30. The actuating circuit 30 actuates each of the actuators 11 to decrease the damping force of each of the shock absorbers 10. As a result, the restriction of the oil flow within the shock absorbers is released enabling a prompt expansion of the shock absorbers 10. The vehicle's roll is promptly decreased from the point C as illustrated in the solid line in Figure 2(C), and the operator can readily drive the vehicle in the straight line.

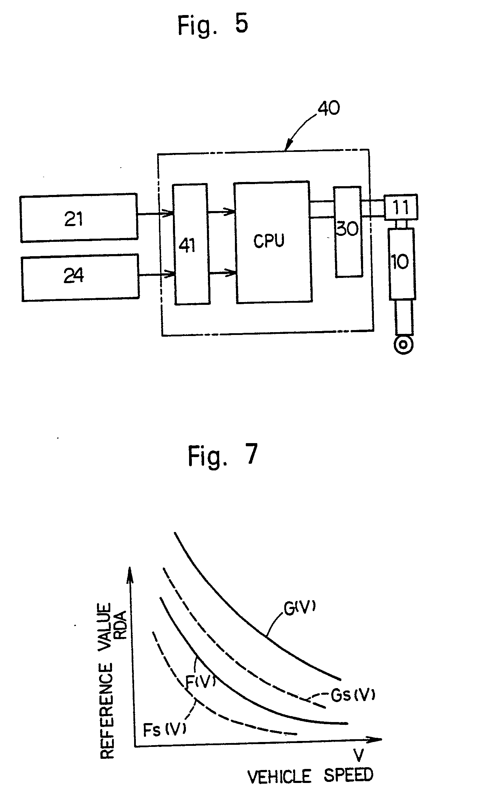

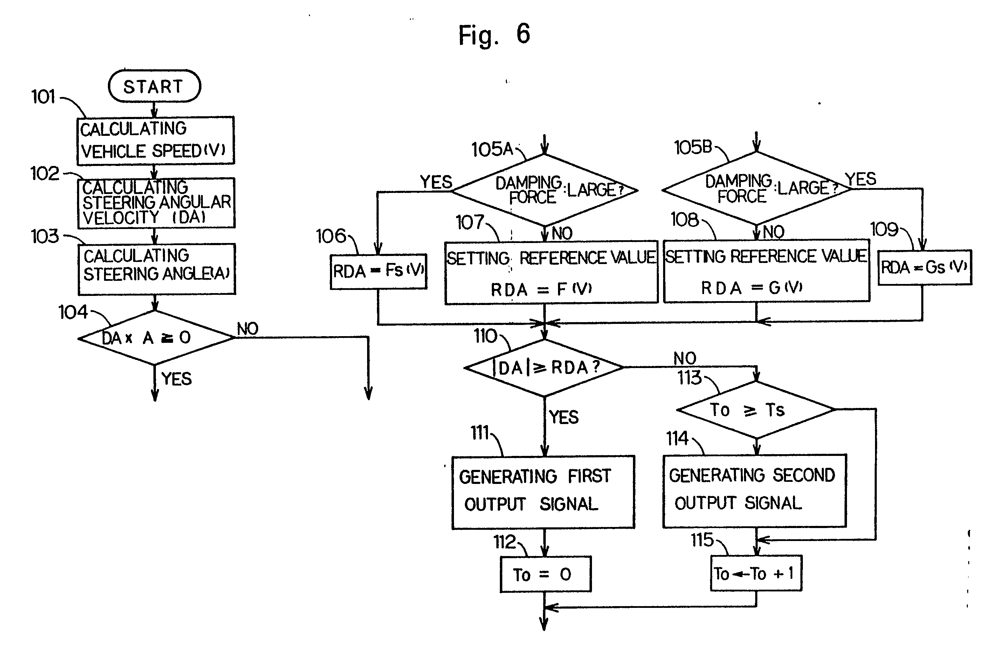

Figures 5 through 7 show a second embodiment of the present invention. In this second embodiment, a digital type electronic control unit 40 is employed instead of the analog type electronic control unit 20 according to the first embodiment. The digital type electronic control unit 40 has a buffer 41 receiving the output signals of the vehicle speed sensor 21 and the steering angle sensor 24, a central processing unit (hereinafter referred to as CPU) for receiving the output signals of the buffer 41 in accordance with the flow charge illustrated in Figure 6, and an actuating circuit 30 for operating actuators 11 according to the output signals of the CPU.

Figure 6 illustrates the flow chart of the steps in the CPU. A step 101 calculates a vehicle speed (V) from the signal of the vehicle speed sensor 21. Next, the program proceeds to step 102. The step 102 calculates a steering angular velocity, "DA", from the signal of the steering angle sensor 24. In step 102, when the steering shaft is rotated in the clockwise direction from the neutral position, step 102 is designed to issue a positive steering angular velocity, "DA". On the other hand, when the steering shaft is rotated in the counterclockwise direction from the neutral position, step 102 is designed to issue a negative steering angular velocity, "DA". The program proceeds to step 103. Step 103 calculates a steering angle, "A". Step 103 is designed to ensure that a steering angle is 0° at the neutral steering position, that a steering angle, "A" is positive when the steering shaft is being rotated clockwise from the neutral steering position, and that a steering angle, "A", is negative when the steering shaft is being rotated counterclockwise from the neutral steering position. The program proceeds to step 104. Step 104 determines whether the multiplied value, "DA × A" is positive or not. When the multiplied value, "DA × A" is positive or equal to zero, the program proceeds to step 105a. When the multiplied value "DA × A" is negative, the program proceeds to step 105B. In step 105A, it is determined whether or not the damping force of the shock absorber 10 is large. When the damping force of the shock absorber 10 is large, the program proceeds to step 106. Step 106 sets a reference value, "RDA" according to the actual vehicle speed, "V". The reference value, "RDA" is determined by a characteristic curve Fs(V) illustrated in Figure 7. When step 105A determines that the damping force of the shock absorbers 10 is small, the program proceeds to step 107. Step 107 sets a reference value, "RDA" according to the actual vehicle speed, "V". This reference value, "RDA", is determined by a characteristic curve F(V) illustrated in Figure 7.

Step 105B determines whether or not the damping force of the shock absorber 10 is large. When the damping force of the shock absorber 10 is large, the program proceeds to step 109. Step 109 sets a reference value, "RDA" according to the actual vehicle speed, "V". The reference value, "RDA", is determined by a characteristic curve "Gs(V)" illustrated in Figure 7. When the damping force of the shock absorber 10 is small, the program proceeds to step 108. Step 108 sets a reference value, "RDA", according to the actual vehicle speed, "V". The reference value, "RDA", is determined a characteristic curve "G(V)" illustrated in Figure 7. Thus, each reference value, "RDA", is selectively set by steps 106 through 109. Next, the program proceeds to step 110. Step 110 compares the actual steering angular velocity, "DA", with the reference value, "RDA". If the absolute value of the actual steering angular velocity, "|DA|", is larger than or equal to that of the reference value, "RDA", the program proceeds to step 111. If the absolute value of the actual steering angular velocity, "|DA|" is smaller than that of the reference value, "RDA", the program proceeds to step 113. In step 111, the CPU issues the first output signal. This first output signal is inputted to the actuating circuit 30, thereby the circuit 30 operates the actuators 11 to increase the damping force of the shock absorbers 10. Thereafter, the program proceeds to step 112. In step 112, a timer "To" is set to be zero. Step 113 issues a signal to step 114 when the timer "To" counts a predetermined time, "Ts". Next, the program proceeds to step 114. In step 114, the CPU issues a second output signal. This second output signal is inputted to the actuating circuit 30, thereby the circuit 30 operates the actuators 11 to decrease the damping force of each of the shock absorbers 10.

In operation, when a vehicle equipped with the electronic control unit 40 runs along the curved road as shown in Figure 1 at a high speed, an operator rotates the steering wheel 14 in the counterclockwise direction at the point B. At this time, the vehicle rolls to the position as shown in the broken line in Figure 1. Step 104 of the program determines that the multiplied results, "DA × A", is larger than the value zero. Due to this, the program proceeds to step 105A. If the damping force of the shock absorber 10 is determined to be small in step 105A, the program proceeds to step 107. Step 107 sets the reference value, "RDA", to be equal to the value decided by the characteristic curve "F(V)" in Figure 7. As the absolute value of the actual steering angular velocity, "|DA|", becomes larger than that of the reference value, "RDA", the program proceeds to step 111. In step 111, the CPU issues the first output signal. This first output signal is inputted to the actuating circuit 30. The actuating circuit 30 operates each of the actuators 11 so as to increase the damping force of the shock absorbers 10. Hence, the oil flow within the shock absorbers 10 is restricted, thereby it decreases the speed when the shock absorbers are contracted. As a result, the vehicle roll speed is constrained to be small as illustrated in the solid line of Figure 2(c).

When the operator further rotates the steering wheel in the counterclockwise direction during driving on the curved road, step 104 decides that the multiplied value, "DA × A" becomes larger than the value zero. The program proceeds to step 105A. If the damping force of the shock absorbers 10 is large, the program proceeds step 106. Step 106 sets the reference value, "RDA" to be equal to the value determined by the characteristic curve "Fs(V)" in Figure 7. As the absolute value of the actual steering angular velocity, "|DA|", becomes larger than that of the reference value, "RDA", the CPU issues the first output signal in step 111. Hence, the actuating circuit 30 operates each of the actuators 11 in order to further increase the damping force of the shock absorbers 10. Owing to this, the operator can easily steer the vehicle even when driving along curved road sections. Thus, the operator drives through the curved road section, and reaches the point C. When the operator quickly rotates the steering wheel in the direction from the steered position to the neutral position, step 104 determines that the multiplied value, "DA × A", becomes negative and smaller than the value zero. The program proceeds to step 105B. If step 105B determines that the damping force of the shock absorber 10 is large, the program proceeds to step 109. Step 109 sets the reference value, "RDA" to be equal to the value determined by the characteristic curve, "Gs(V)" in Figure 7. As the absolute value of the actual steering angular velocity, "|DA|", becomes smaller than that of the reference value, "RDA", the program proceeds to step 113. After the time elapses by the time "Ts", the program proceeds to step 114. In step 114, the CPU issues the second output signal. As a result, the actuating circuit 30 operates each of the actuators 11 in order to decrease the damping force of the shock absorbers 10. Hence, the oil flow within the shock absorbers 10 is free from the restriction, and they can readily expand. The vehicle roll is promptly overcome as indicated in the solid line of Figure 2(c), thereby it facilitates immediate driving of the vehicle in the straight line.

**Claims**

1. A shock absorber control unit for use in a vehicle having a steering wheel (14) and a shock absorber (10) whose damping force is adjustable, comprising a vehicle speed sensor (21) for detecting a vehicle speed, a vehicle speed signal generating means (22) for receiving the vehicle speed detected by the vehicle speed sensor (21) and generating a vehicle speed signal, a steering angle sensor (24) for detecting a steering angle of the steering wheel (14), a steering angular velocity signal generating means (25) for receiving the steering angle detected by the steering angle sensor (24) and generating a steering angular velocity signal, an actuating means (11, 30) for adjusting a damping force of the shock absorber (10), and a control circuit (20, 40) responsive to said angular velocity signal and said vehicle speed signal to generate an output signal for use in controlling the operation of said actuating means, characterized in that said control circuit includes a reference value setting means (28) for setting a reference value determined by the steered direction of the steering wheel (14), and a comparing means (29) for comparing the reference value with the steering angular velocity signal and generating said output signal, in that the reference value setting means (28) sets a first reference value when the steering wheel (14) is steered in the direction from its neutral position to a steered position and sets a second reference value to be larger than that of the first reference value when the steering wheel (14) is steered in the direction from the steered position to the neutral position, in that the comparing means (29) compares one of the reference values with the steering angular velocity signal and generates a first output signal when the steering angular velocity signal is larger than one of the reference values and a second output signal when the steering angular velocity signal is smaller than the reference values, and in that the actuating means (11, 30) increases a damping force of the shock absorber (10) when the first output signal is generated or decreases the damping force of the shock absorber (10) when the second output signal is generated by the comparing means (29).

2. A shock absorber control unit as claimed in Claim 1, wherein the first reference value of the reference value setting means (28) is determined by the value of the vehicle speed.

3. A shock absorber control unit as claimed in Claim 2, wherein the actuating means (11, 30) comprises an actuating circuit (30) for receiving the output signal of the comparing means (29) and generating an actuating signal, and an actuator (11) for receiving the actuating signal of the actuating circuit (30) and controlling the damping force of the shock absorbers (10).

4. A shock absorber control unit as claimed in Claim 3, wherein a central processing unit functions as the vehicle speed signal generating means (22), the reference value setting means (28), the comparing means (29), and the actuating circuit (30).

5. A shock absorber control unit as claimed in Claim 1 including means (23) for generating a signal of an amended value of the steering angular velocity to be inputted to said comparator means (29), said means (23) generating a signal of an amended value which is a larger value when a relatively high vehicle speed signal is inputted thereto and is a smaller value when a relatively low vehicle speed is inputted thereto.

**Patentansprüche**

1. Steuereinheit für Stoßdämpfer zur Verwendung in einem Kraftfahrzeug, das ein Lenkrad (14) und einen Stoßdämpfer (10) aufweist, dessen Dämpfungskraft einstellbar ist, mit einem Fahrzeuggeschwindigkeitssensor (21) zur Bestimmung einer Fahrzeuggeschwindigkeit, einer ein Fahrzeuggeschwindigkeitssignal erzeugenden Vorrichtung (22), die die Fahrzeuggeschwindigkeit, die mittels des Fahrzeuggeschwindigkeitssensors (21) bestimmt ist, empfängt und ein Fahrzeuggeschwindigkeitssignal erzeugt, einem Lenkwinkelsensor (24) zur Bestimmung eines Lenkwinkels des Lenkrades (14), einer ein Lenkwinkelgeschwindigkeitssignal erzeugenden Vorrichtung (25), die den Lenkwinkel, der mittels des Lenkwinkelsensors (24) bestimmt ist, empfängt und ein Lenkwinkelgeschwindigkeitssignal erzeugt, einer Auslösevorrichtung (11, 30) zum Einstellen einer Dämpfungskraft des Stoßdämpfers (10) und einem Steuerschaltkreis (20, 40), der in Abhängigkeit von dem Winkelgeschwindigkeitssignal und dem Fahrzeuggeschwindigkeitssignal ein Ausgangssignal zur Verwendung bei der Steuerung der Betätigung der Auslösevorrichtung erzeugt, dadurch gekennzeichnet, daß der Steuerschaltkreis eine einen Vegleichswert festsetzende Vorrichtung (28), die einen Vergleichswert festsetzt, der durch die Lenkrichtung des Lenkrades (14) bestimmt ist, und einen Vergleichsvorrichtung (29) aufweist, die den Vergleichswert mit dem Lenkwinkelgeschwindigkeitssignal vergleicht und das Ausgangssignal erzeugt, daß die den Vergleichswert festsetzende Vorrichtung (28) einen ersten Vergleichswert festsetzt, wenn das Lenkrad (14) aus seiner neutralen Position in eine ausgelenkte Position gelenkt wird, sowie einen zweiten Vergleichswert, der größer als der erste Vergleichswert ist, festsetzt, wenn das Lenkrad (14) aus der ausgelenkten Position in die neutrale Position gelenkt wird, daß die Vergleichsvorrichtung (29) einen der Vergleichswerte mit dem Lenkwinkelgeschwindigkeitssignal vergleicht und ein erstes Ausgangssignal erzeugt, wenn das Lenkwinkelgeschwindigkeitssignal größer als einer der Vergleichswerte ist, sowie ein zweites Ausgangssignal erzeugt, wenn das Lenkwinkelgeschwindigkeitssignal kleiner als die Vergleichswerte ist, und daß die Auslösevorrichtung (21, 30) die Dämpfungskraft des Stoßdämpfers (10) erhöht, wenn das erste Ausgangssignal erzeugt ist, oder die Dämpfungskraft des Stoßdämpfers (10) verringert, wenn das zweite Ausgangssignal von der Vergleichsvorrichtung (29) erzeugt ist.

2. Steuereinheit nach Anspruch 1, dadurch gekennzeichnet, daß der erste Vergleichswert der den Vergleichswert festsetzenden Vorrichtung (28) durch den Wert der Fahrzeuggeschwindigkeit bestimmt ist.

3. Steuereinheit nach Anspruch 2, dadurch gekennzeichnet, daß die Auslösevorrichtung (11, 30) einen Auslöseschaltkreis (30), der das Ausgangssignal der Vergleichsvorrichtung (29) empfängt und ein Auslösesignal erzeugt, und ein Auslöseelement (11) aufweist, daß das Auslösesignal des Auslöseschaltkreises (30) empfängt und die Dämpfungskraft des Stroßdämpfers (10) steuert.

4. Steuereinheit nach Anspruch 3, dadurch gekennzeichnet, daß eine Zentraleinheit als Fahrzeuggeschwindigkeitssignal erzeugende Vorrichtung (22), als den Vergleichswert festsetzende Vorrichtung (28), als die Vergleichsvorrichtung (29) und als Auslöseschaltkreis (30) dient.

5. Steuereinheit nach Anspruch 1, gekennzeichnet durch eine Vorrichtung (23) zur Erzeugung eines Signals mit einem geänderten Wert der Lenkwinkelgeschwindigkeit, das der Vergleichsvorrichtung (29) eingegeben wird, wobei die Vorrichtung (23) ein Signal mit einem geänderten größeren Wert erzeugt, wenn ein Signal relativ hoher Fahrzeuggeschwindigkeit in diese eingegeben ist, sowie mit einem geringeren Wert erzeugt, wenn ein Signal relativ geringer Fahrzeuggeschwindigkeit in diese eingegeben ist.

## Revendications

1. Une unité de commande d'amortisseur destinée à être utilisée dans un véhicule comportant un volant (14) et un amortisseur (10) dont la force d'amortissement est réglable, comportant un capteur de vitesse de véhicule (21) pour détecter une vitesse de véhicule, des moyens (22) de génération de signal de vitesse de véhicule pour recevoir la vitesse de véhicule détectée par le capteur (21) de vitesse de véhicule et engendrer un signal de vitesse de véhicule, un capteur (24) d'angle de braquage pour détecter un angle de braquage du volant (14), des moyens de génération de signal de vitesse angulaire de braquage (25) pour recevoir l'angle de braquage détecté par le capteur (24) d'angle de braquage et engendrer un signal de vitesse angulaire de braquage, des moyens d'actionnement (11, 30) pour régler une force d'amortissement de l'amortisseur (10) et un circuit de commande (20, 40) sensible audit signal de vitesse angulaire et audit signal de vitesse de véhicule pour engendrer un signal de sortie destiné à être utilisé pour commander le fonctionnement desdits moyens d'actionnement, caractérisée en ce que ledit circuit de commande comporte des moyens (28) de réglage d'une valeur de référence pour fixer une valeur de référence déterminée par la direction de braquage du volant (14) et des moyens de comparaison (29) pour comparer la valeur de référence avec le signal de vitesse angulaire de braquage et engendrer ledit signal de sortie, en ce que les moyens (28) de réglage de valeur de référence fixent une première valeur de référence lorsque le volant (14) est braqué dans la direction allant de sa position neutre vers une position braquée et fixent une seconde valeur de référence plus importante que la première lorsque le volant (14) est braqué dans la direction allant de la position braquée vers la position neutre, en ce que les moyens de comparaison (29) comparent l'une des valeurs de référence avec le signal de vitesse angulaire de braquage et engendrent un premier signal de sortie lorsque le signal de vitesse angulaire de braquage est supérieur à l'une des valeurs de référence et un second signal de sortie lorsque le signal de vitesse angulaire de braquage est inférieur aux valeurs de référence, et en ce que les moyens d'actionnement (11, 30) augmentent une force d'amortissement de l'amortisseur (10) lorsque le premier signal de sortie est engendré ou diminuent la force d'amortissement de l'amortisseur (10) lorsque le second signal de sortie est engendré par les moyens de comparaison (29).

2. Une unité de commande d'amortisseur telle que revendiquée à la revendication 1, dans laquelle la première valeur de référence des moyens (28) de réglage de valeurs de référence est déterminée par la valeur de la vitesse du véhicule.

3. Une unité de commande d'amortisseur telle que revendiquée à la revendication 2, dans laquelle les moyens d'actionnement (11, 30) comportent un circuit d'actionnement (30) destiné à recevoir le signal de sortie des moyens de comparaison (29) et à engendrer un signal d'actionnement, et un organe d'actionnement (11) destiné à recevoir le signal d'actionnement du circuit d'actionnement (30) et à commander la force d'amortissement des amortisseurs (10).

4. Une unité de commande d'amortisseur telle que revendiquée à la revendication 3, dans laquelle une unité centrale de traitement sert de moyen (22) de génération de signal de vitesse de véhicule, de moyen (28) de réglage de valeurs de référence, de moyen (29) de comparaison et de circuit d'actionnement (30).

5. Une unité de commande d'amortisseur telle que revendiquée à la revendication 1, comportant des moyens (23) pour engendrer un signal d'une valeur corrigée de la vitesse angulaire de braquage à introduire dans lesdits moyens de comparaison (29), lesdits moyens (23) engendrant un signal d'une valeur corrigée qui est majorée lorsqu'un signal de vitesse de véhicule relativement important y est introduit et qui est minorée lorsqu'un signal de vitesse de véhicule relativement faible y est introduit.

# Fig. 1

# Fig. 2

(a)

(b)

(C)

Fig. 3

Fig. 4

## Fig. 5

## Fig. 7

## Fig. 6

START

101 — CALCULATING VEHICLE SPEED (V)

102 — CALCULATING STEERING ANGULAR VELOCITY (DA)

103 — CALCULATING STEERING ANGLE (A)

104 — DA × A ≥ 0 — NO

YES

105A — DAMPING FORCE : LARGE? — YES

106 — RDA = Fs (V)

107 — NO — SETTING REFERENCE VALUE RDA = F (V)

105B — DAMPING FORCE : LARGE? — YES

108 — NO — SETTING REFERENCE VALUE RDA = G (V)

109 — RDA = Gs (V)

110 — |DA| ≥ RDA? — NO

YES

111 — GENERATING FIRST OUTPUT SIGNAL

112 — To = 0

113 — To ≥ Ts

114 — GENERATING SECOND OUTPUT SIGNAL

115 — To ← To + 1